# EUROPÄISCHE PATENTSCHRIFT

(11) **EP 0 720 888 B1**
(45) Veröffentlichungstag und Bekanntmachung des Hinweises auf die Patenterteilung: **24.02.1999**
(21) Anmeldenummer: 95116858.2
(22) Anmeldetag: 26.10.1995
(51) Int. Cl.: B23Q 3/12

(54) **Handgeführte Werkzeugmaschine**
Hand tool
Outil à main

(30) Priorität: 20.12.1994 DE 4445598
(43) Veröffentlichungstag der Anmeldung: 10.07.1996
(73) Patentinhaber: Atlas Copco Electric Tools GmbH, 71364 Winnenden (DE)
(72) Erfinder: Vögele, Roland, D-71364 Winnenden (DE); Keller, Ulrich, D-74321 Bietigheim-Bissingen (DE); Beuthner, Michael, D-70199 Stuttgart (DE)
(74) Vertreter: Gaiser, Hartmut, Dipl.-Ing.

(56) Entgegenhaltungen:
- EP-A- 0 556 713
- DE-A- 4 203 158

## Beschreibung

Die Erfindung betrifft eine handgeführte Werkzeugmaschine, wie Bohrmaschine, Schlagbohrmaschine, Schrauber, mit einer motorisch angetriebenen Spindel und einer Werkzeugaufnahme, wobei die Spindel drehend und axial schlagend beweglich ist.

In der DE 38 42 401 A1 ist für eine Bohrmaschine ein Adapter mit Werkzeugaufnahmen für zwei spezielle Werkzeuge beschrieben. Der Adapter muß auf ein Gewinde der Spindel der Bohrmaschine aufgeschraubt werden. Dies erschwert das Wechseln des Adapters. Ein schneller und werkzeugloser Adapterwechsel ist also nicht möglich. Ein ähnlicher Adapter ist auch in der DE 39 30 250 A1 gezeigt.

Aus der DE 36 36 229 A1 ist eine Bohr-Schraubmaschine bekannt, in die wahlweise ein Bohrfutter oder ein Schraubwerkzeug einsteckbar sind, die dann mit unterschiedlichen Drehzahlen angetrieben werden. Dies ist durch eine spezielle Anpassung des Bohrfutters und des Schraubwerkzeugs an das Getriebe der Maschine erreicht.

Die DE 42 03 158 A1 beschreibt einen Wechselfuttervorsatz für eine Bohr-Schraubmaschine. Der Wechselfuttervorsatz weist eine Welle und eine auf diese aufsteckbare Hülse auf, die manuell einfach voneinander lösbar sind. Die Welle ist mit der Spindel der Maschine verschraubt oder von der Spindel selbst gebildet. Die Hülse ist mit einem Außengewinde versehen, auf dem eine Werkzeugaufnahme für einen Bohrer oder einen Schraubendreher aufschraubbar ist.

In der EP 0 556 713 B1 ist eine Einrichtung zum Werkzeugwechsel an einer handgeführten Werkzeugmaschine, insbesondere einer Bohrhammermaschine zum wahlweisen Betrieb mit einem Hammerbohrer oder einem anderen Werkzeug, beschrieben. Für den Drehantrieb ist eine Spindelhülse vorgesehen. Um den Werkzeugwechsel bei einfachem Aufbau schnell zu ermöglichen, ist in wenigstens einer Durchbrechung der Spindelhülse ein deren Drehung mitmachender Verriegelungskörper gelagert. Ein hohlzylindrischer Adapter, an dem das betreffende Werkzeug festlegbar ist, ist mit einer Führungsfläche axial in die Spindelhülse einsteckbar und weist zur drehfesten und axial festen Verbindung mit der Spindelhülse Vertiefungen auf. An der Spindelhülse ist eine Außenhülse verschieblich, die in einer Verriegelungsstellung die Verriegelungskörper in den Vertiefungen blockiert und sie in ihrer Freigabestellung radial freigibt. Diese Einrichtung bewährt sich bei Bohrhammermaschinen, bei denen die Spindelhülse nur rotiert und bei denen die Schlagbewegung mittels eines Döppers auf das im Adapter axial verschieblich geführte Werkzeug übertragen wird.

In der EP-A-0 556 713 ist zwar erwähnt, daß die Einrichtung auch bei Schlagbohrmaschinen verwendet werden kann. Eine axiale Bewegung der Spindelhülse ist jedoch nicht beschrieben und eine andere Schlagbewegung als die durch den Döpper ist nicht erwähnt.

Schlagbohrmaschinen arbeiten mit einem im Vergleich zu Bohrhammermaschinen einfachen Axial-Schlagwerk, nämlich mit einem Schlagwerk nach dem Ratschenprinzip. Es ergeben sich dabei wesentlich höhere Schlagzahlen pro Zeiteinheit. Bei Schlagbohrmaschinen führt die Spindel selbst sowohl die Rotationsbewegung als auch die Schlagbewegung aus. Dies hat zur Folge, daß bei einer für die möglichst von Radialspiel freien Führung des Werkzeugs nötigen engen Passung zwischen der Spindel und dem Adapter "Passungsrost" entsteht. Dieser führt schon nach kurzer Betriebsdauer dazu, daß der Adapter an der Spindel festsitzt und nicht mehr abgezogen werden kann.

Bei den bekannten Schlagbohrmaschinen ist die Spindel keine - aufwendige - Spindelhülse, da in der Spindel - anders als bei Bohrhammermaschinen - kein Döpper wirken muß. Dementsprechend sind bei Schlagbohrmaschinen einsteckbare Adapter ungebräuchlich.

Ähnlich liegen die Verhältnisse auch bei Bohrmaschinen und Schraubern. Auch dort kann "Passungsrost" durch nichtaxiale Belastungen des Werkzeugs auftreten.

Die bekannten Adapter rotieren mit der Spindel der Werkzeugmaschine. Dies ist unproblematisch, wenn der Adapter koaxial zur Spindel und zum Werkzeug gestaltet ist. Allerdings ist es bei einem solchen mitrotierenden Adapter nicht möglich, ein zusätzliches Getriebe in den Adapter einzubauen.

Aufgabe der Erfindung ist es, eine Werkzeugmaschine der eingangs genannten Art, insbesondere Bohrmaschine, Schlagbohrmaschine, Schrauber, mit einem Adapter vorzuschlagen, wobei Passungsrost zwischen der Spindel und dem Adapter vermieden sein soll.

Erfindungsgemäß ist obige Aufgabe durch die Merkmale des Patentanspruchs 1 gelöst.

Durch die in der Spindelhülse angeordneten Radiallager ist gewährleistet, daß zwischen der Spindelhülse und der Steckachse auch nach längerer Betriebsdauer kein Passungsrost auftritt und die Steckachse so sicher in der Spindelhülse geführt ist, daß das Werkzeug weitestgehend ohne Radialschlag, also ohne großes radiales Spiel geführt ist. Der Adapter, speziell dessen Steckachse, ist somit - auch nach längerer Betriebsdauer - ohne weiteres aus der Spindelhülse herausziehbar, ohne daß ein den exakten Bohrbetrieb beeinträchtigendes radiales Spiel (Radialschlag) des Bohrwerkzeugs in Kauf genommen werden muß.

Bei einer Schlagbohrmaschine, bei der die Spindel sowohl die Drehbewegung als auch die axiale Schlagbewegung ausführt, sind vorzugsweise die Vertiefungen der Steckachse den Verriegelungskörpern so angepaßt, daß die Verriegelungskörper die Schlagbewegung der Spindelhülse auf die Vertiefungen der Einsteckachse übertragen. Es ist auch in anderer Ausgestaltung der Erfindung möglich, in der Spindelhülse ein Axiallager anzuordnen, das die Schlagbewegung der Spindelhülse auf die Steckachse überträgt. Zwischen den Vertiefungen und den Verriegelungskörpern kann dann ein entsprechendes axiales Spiel bestehen.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 eine Teilansicht einer Schlagbohrmaschine mit Adapter im Schnitt, wobei der Adapter oberhalb der Mittelachse in seiner verrasteten Stellung und unterhalb der Mittelachse in seiner freigegebenen Stellung teilweise herausgezogen gezeigt ist,
Figur 2 einen Adapter mitt Schraubbit, gegenüber Fig. 1 verkleinert,
Figur 3 einen Adapter mit Bohrfutter, gegenüber Fig. 1 verkleinert,
Figur 4 eine alternative Ausgestaltung der Maschine, wobei der Adapter oberhalb der Mittelachse in seiner verrasteten Stellung und unterhalb der Mittelachse in seiner freigegebenen Stellung teilweise herausgezogen gezeigt ist,
Figur 5 einen Adapter mit einem drehfest an der Maschine festlegbaren Gehäuse mit Getriebe,
Figur 6 einen Schnitt längs der Linie VI-VI nach Fig. 5,
Figur 7 eine Teilansicht der Verbindung zwischen Adaptergehäuse und Maschinengehäuse,
Figur 8 eine Ansicht des Adapters nach Fig. 5 an einer Einsatzstelle und
Figur 9 eine Ansicht des Adapters längs der Linie V-V nach Fig. 2.

Eine schlagbohrmaschine(1) weist eine in einem handführbaren Gehäuse (2) gelagerte Spindelhülse(3) auf. Diese ist über ein Ritzel(4) eines nicht näher dargestellten Elektromotors und ein Zahnrad (5) um die Mittelachse(A) rotierend antreibbar. Mittels eines nach dem Ratschenprinzip arbeitenden Schlagwerks (6) (Ratschenschlagwerk) ist die Spindelhülse(3) in eine axial schlagende Bewegung versetzbar, wenn auf sie ein in Richtung des Pfeiles(P) wirkender Druck ausgeübt wird. Dies ist die übliche Funktion einer Schlagbohrmaschine.

Das Schlagwerk ist gewöhnlich abschaltbar.

In die Spindelhülse(3) sind ein inneres Radiallager(7) und ein äußeres Radiallager(8) eingesetzt. Beim Ausführungsbeispiel sind diese Radiallager(7,8) Radial-Nadellager. Es können jedoch auch Radial-Gleitlagerbuchsen (PU-Buchsen) verwendet werden.

Zwischen dem inneren Radiallager(7) und dein äußeren Radiallager(8) weist die spindelhülse(3) Durchbrechungen (9) auf, in denen Verriegelungskörper(10), speziell Verriegelungskugeln, liegen.

Konzentrisch zur Mittelachse(A) ist außen an der Spindelhülse(3) ein Aufenring(11) verschieblich gelagert, der eine Schiebehülse(12) trägt. Der Außenring(11) ist durch eine Druckfeder(13) belastet, die sich an einem Bund(14) der Spindelhülse(3) abstützt. Der Außenring(11) bildet eine Anlagefläche(15), mit der die verriegelungskörper(10) radial nach innen drückbar sind. Die Schiebehülse(12) bildet eine Tasche(16), in die die Verriegelungskörper(10) radial nach außen ausweichen können.

In der Spindelhülse(3) ist ein Innenring(17) verschieblich gelagert, der durch eine Druckfeder(18) belastet ist, welche sich am inneren Radiallager(7) abstützt.

Ein Adapter(19) weist eine steckachse(20) auf. Diese ist mit den Radiallagern(7,8) zugeordneten Lagerflächen (21,22) versehen. Zwischen den Lagerflächen(21,22) sind an der Steckachse(20) den Verriegelungskörpern(10) zugeordnete Vertiefungen(23) ausgebildet. Außerdem weist die Steckachse(20) neben den Vertiefungen(23) eine Schräge(24) zur Verschiebung des Innenrings(17) auf.

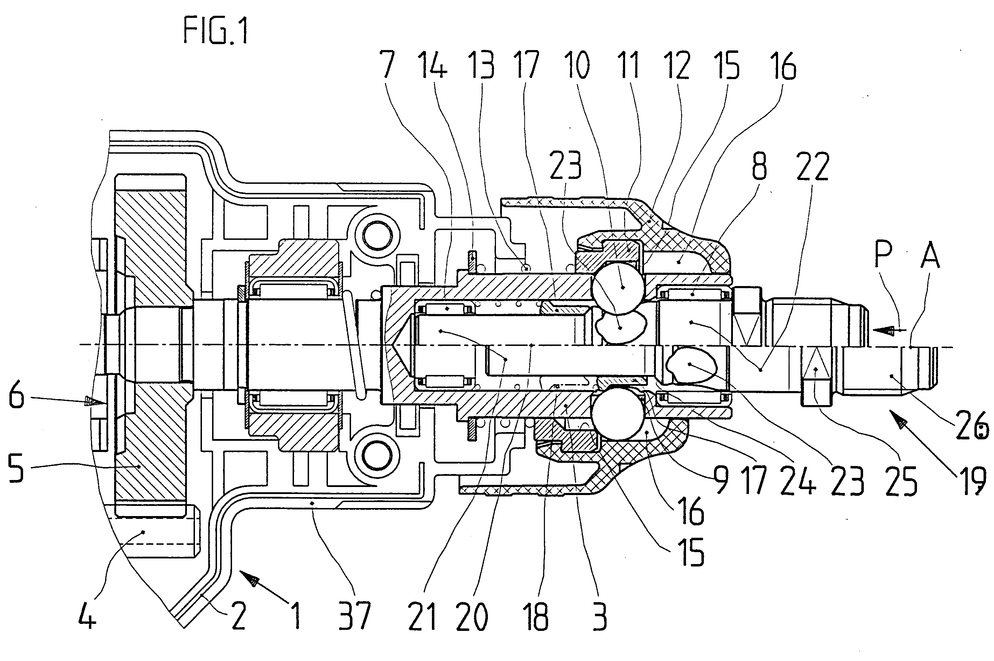

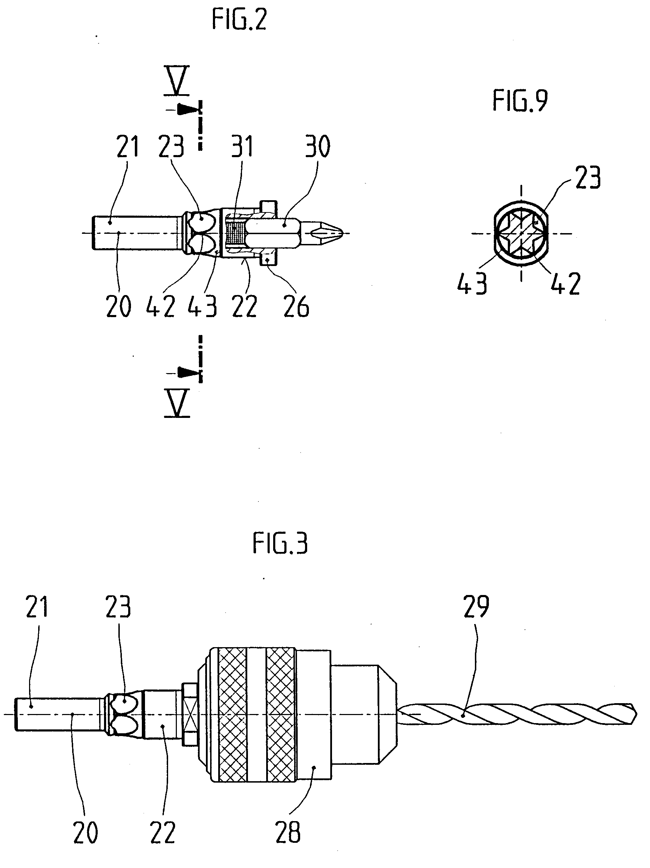

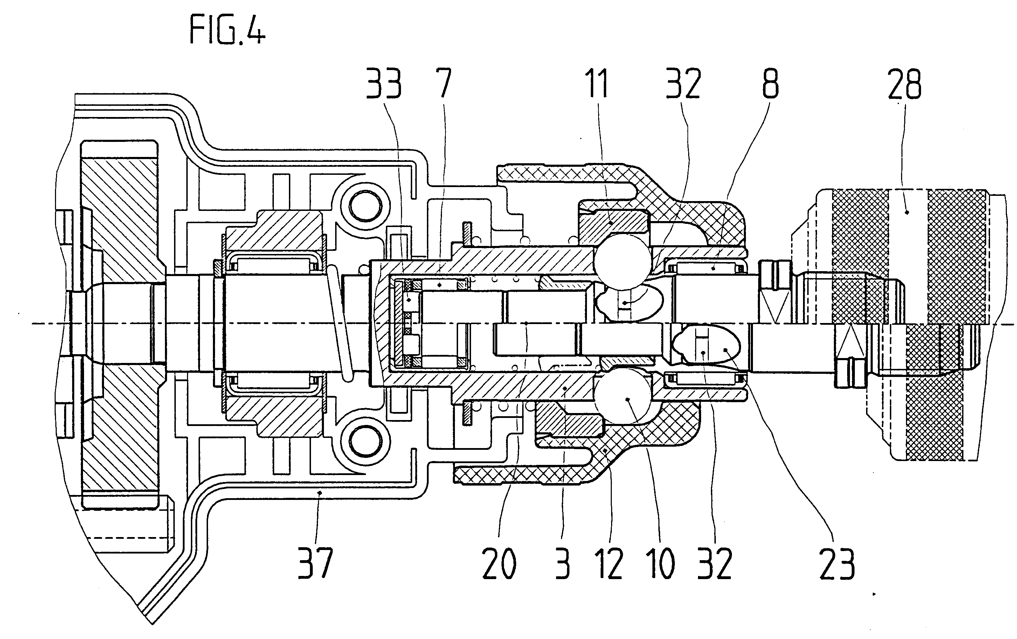

Außerhalb der Spindelhülse(3) ist der Adapter(19) mit Abplattungen(25) und einer Werkzeugaufnahme(26) versehen. Die Werkzeugaufnahme(26) ist entsprechend des jeweils zu verwendenden Werkzeugs gestaltet. Die Steckachse(20) ist bei allen Adaptern gleich. Nur die Werkzeugaufnahmen(26) unterscheiden sich. Die Figuren 1 und 4 zeigen ein Außgengewinde der Werkzeugaufnahme(26). Auf dieses läßt sich beispielsweise ein Bohrfutter(28) aufschrauben, das mit einem Bohrer(29) in üblicher Weise bestückbar ist (vgl. Fig. 3). Die Werkzeugaufnahme(26) kann auch für die Aufnahme eines Schraubbits(30) vorgesehen sein, wobei dann die Werkzeugaufnahme(26) vorzugsweise mit einem Haltemagneten(31) ausgestattet ist (vgl. Fig. 2).

Die Funktionsweise ist im wesentlichen folgende;

Ist der Adapter(19) mit seiner Steckachse(20) in die Spindelhülse(3) eingesteckt, dann liegen die Lagerflächen (21,22) in den Radiallagern(7,8). Die Schräge(24) hat den Innenring(17) gegen die Kraft der Druckfeder(18) zurückgedrückt, so daß die Verriegelungskörper(10) in die Vertiefungen(23) greifen (vgl. Fig. 1 und Fig. 4 oberhalb der Mittelachse A). Die Verriegelungskörper(10) übertragen die Drehbewegung der Spindelhülse(3) formschlüssig auf die Steckachse(20) und damit den Adapter(19). Bei der Ausführung nach Fig. 1 sind die Vertiefungen(23) so gestaltet, daß sie auch die axiale Schlagbewegung der Spindelhülse(3) und damit der Verriegelungskörper(10) aufnehmen. Bei der Ausführung nach Fig. 1 übertragen also die Verriegelungskörper(10) sowohl die Rotationsbewegung als auch die axiale Schlagbewegung der Spindelhülse(3) auf die Vertiefungen (23) der Steckachse(20). Die Radiallager(7,8) wären theoretisch nicht notwendig, weil die Steckachse(20) mit der Spindelhülse(3) mitrotiert. Es hat sich jedoch gezeigt, daß ohne die Radiallager(7,8) infolge von Mikroschwingungen zwischen der Spindelhülse(3) und der Steckachse(20) Passungsrost auftritt, welcher dazu führt, daß sich die Steckachse(20) schon nach vergleichsweise kurzer Betriebsdauer kaum mehr aus der Spindelhülse(3) herausziehen läßt, was das gewünschte Wechseln des Adapters(19) praktisch unmöglich macht. Die Radiallager (7,8) einzusparen und statt dessen eine größere Passung zwischen den Lagerflächen(21,22) der Steckachse(20) und der Spindelhülse(3) vorzusehen, hätte die nachteilige Folge, daß dann der Adapter(19) mit einem vergleichsweise großen Radialspiel behaftet wäre, was exakte Bohrungen unmöglich macht.

Bei der Ausführung nach Fig. 4 ist in den Vertiefungen (23) ein Axial-Spielbereich(32) gestaltet. Die Verriegelungskörper(10) übertragen dadurch nicht die axiale Schlagbewegung auf die Vertiefungen(23). Um die axialen Bewegungen der Spindelhülse(3) auf die Steckachse (20) zu übertragen, ist beim inneren Radiallager(7) ein zusätzliches Axiallager(33) vorgesehen. Im übrigen entspricht die Funktionsweise der Ausführung nach Fig. 4 der Ausführung nach Fig. 1.

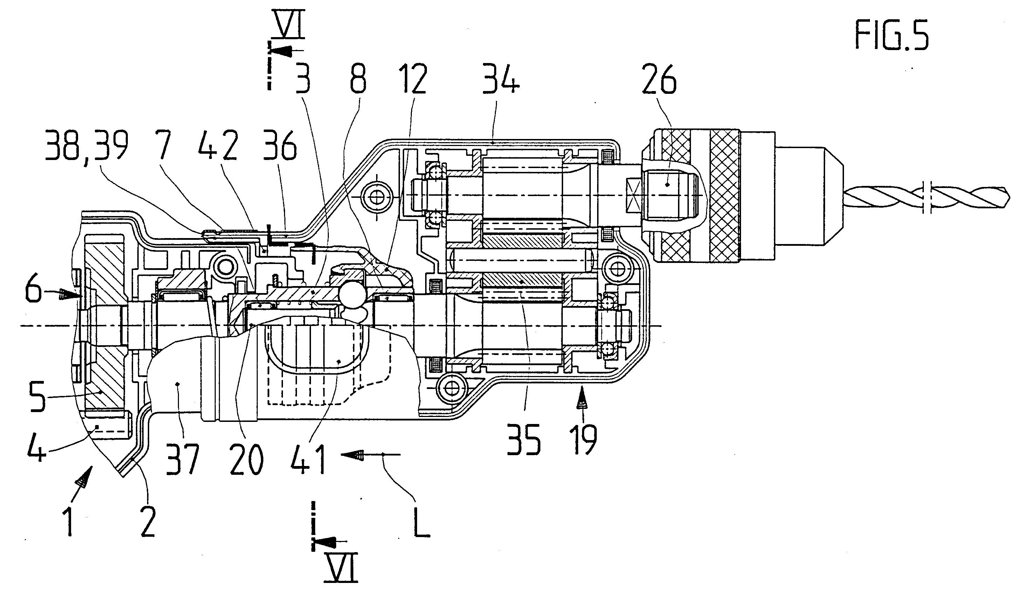

Der Adapter(19) nach der Fig. 3 macht die Dreh- und Schlagbewegungen der Spindelhülse(3) mit. Die Fig. 5 bis 8 zeigen einen Adapter(19), der mit einem Adaptergehäuse(34) versehen ist. In dem Adaptergehäuse (34) ist ein Getriebe(35) angeordnet, welches im Beispielsfall ein Eckschraubgetriebe ist, jedoch auch ein Winkelschraubgetriebe oder ein Übersetzungs- oder Untersetzungsgetriebe oder ein anderes Getriebe sein kann. Das Getriebe(35) wirkt zwischen der Steckachse(20) und der Werkzeugaufnahme(26). Dieses kann zur Aufnahme eines Schraubbits oder eines Bohrers gestaltet sein.

Das Adaptergehäuse(34) weist einen zur Mittelachse(A) koaxialen Kragen(36) auf, der auf einen zur Mittelachse(A) koaxialen Hals(37) des Gehäuses(2) der Schlagbohrmaschine(1) aufsteckbar ist.

Der Adapter(19) ist dabei mit einer einzigen Aufsteckbewegung so an die Schlagbohrmaschine(1) ansetzbar, daß einerseits seine Steckachse(20) in drehfester Verbindung mit der Spindelhülse(3) und andererseits sein Adaptergehäuse(34) in drehfester Verbindung mit dem Gehäuse(2) der Schlagbohrmaschine(1) kommt.

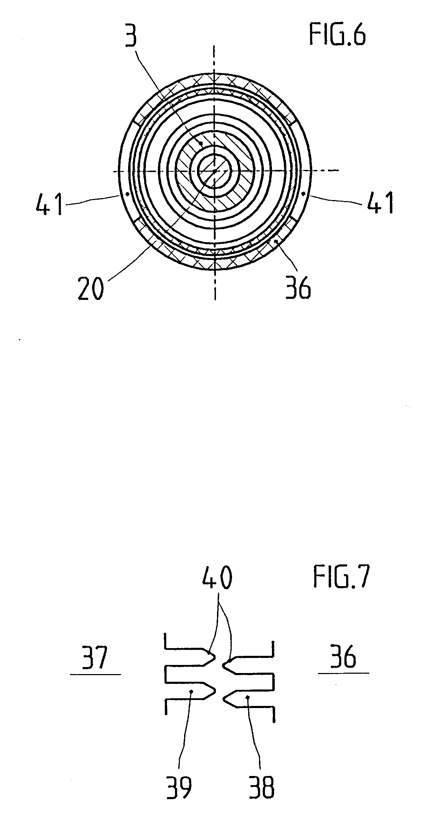

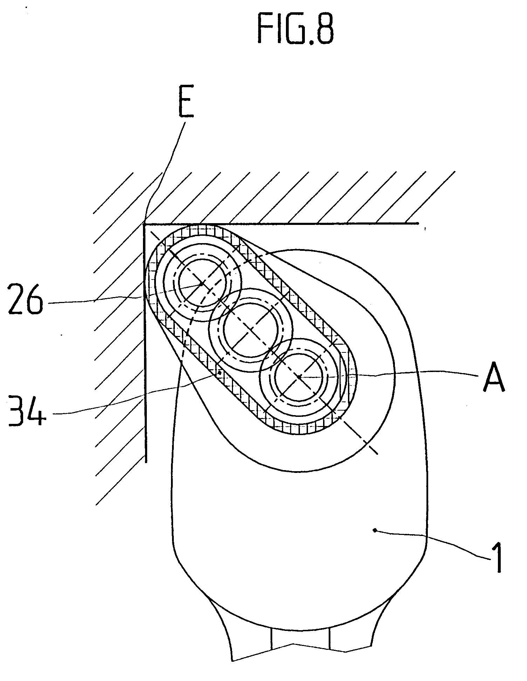

Zur drehfesten Verbindung des Kragens(36) mit dem Hals(37) sind am Kragen(36) und am Hals(37) an deren Umfängen Verzahnungen(38,39) ausgebildet, die zum Erleichtern des Zusammensteckens mit Einführspitzen(40) versehen sind (vgl. Fig. 7). Das Adaptergehäuse(34) läßt sich damit in unterschiedlichen Winkelstellungen drehfest am Gehäuse(2) fixieren. In Fig. 8 ist beispielsweise eine Winkelstellung des Adaptergehäuses(34) von 45^{o} gegenüber der Schlagbohrmaschine(1) gezeigt, wobei es diese Winkelstellung erlaubt, wesentlich enger in einem Eck(E) einer Montagestelle zu schrauben und/oder zu bohren, als dann, wenn die Werkzeugaufnahme(26) koaxial zur Mittelachse(A) stünde.

Der Kragen(36) des Adaptergehäuses(34) übergreift die Schiebehülse(12) (vgl. Fig. 5). Diese liegt also innerhalb des Adaptergehäuses(34). Um sie zum Lösen des Adapters manuell erreichbar zu machen, weist das Adaptergehäuse(34) Durchbrüche(41) auf.

Wenn vermieden sein soll, daß das Adaptergehäuse(34) die möglichen Schlagbewegungen der Spindelhülse(3) mitmacht, ist zwischen dem Adaptergehäuse(34) und dem Gehäuse(2) der Schlagbohrmaschine(1) ein Anschlag(42) vorgesehen. Der Anschlag(42) verhindert, daß beim Schrauben und/oder Bohren der ausgeübte Druck über die Steckachse(20) so auf die Spindelhülse(3) wirkt, daß sie eine schlagende Bewegung ausführt.

Die Vertiefungen(23) bilden aufgrund ihrer Größe am Außendurchmesser(43) spitze Übergänge(42) (vgl. Fig. 9), so daß die Kugeln(10) beim Einschieben den Adapter(19) unter dem Vorsprung der Feder(13) und des Außenrings(11) so drehen, daß die Kugeln(10) in die Vertiefungen(23) einrasten. Die Kugeln(10) bleiben also nicht auf dem Durchmesser(43) stehen und blockieren damit den Außenring (11) nicht.

Bei der Ausführung nach den Fig. 5 bis 8 ist es nicht notwendig, daß die Spindelhülse(3) nach der in den Fig. 1 oder 4 beschriebenen Weise mit der Steckachse(20) gekoppelt ist. Es genügt auch eine andere steckbare, drehfeste Verbindung. Bietet die Steckachse(20) mit der Spindelhülse(3) nicht den notwendigen axialen Halt des Adapters(19), dann kann die Verbindung zwischen dem Kragen(36) und dem Hals(37) so ausgelegt werden, daß sie, beispielsweise bajonettverschlußartig, die notwendige axiale Sicherung gewährleistet.

Zum Lösen des Adapters(19) wird von Hand die Schiebehülse (12) in Richtung des Pfeiles(L) gegen die Kraft der Druckfeder(13) verschoben (vgl. Fig. 1 unterhalb der Mittelachse A). Die Anlagefläche(15) entfernt sich dadurch von den Verriegelungskörpern(10) und die Tasche (16) liegt ihnen gegenüber. Wird dann die Steckachse(20) des Adapters(19) herausgezogen, dann wandert der Innenring(17) unter der Kraft der Druckfeder(18) nach und drückt die Verriegelungskörper(10) in die Tasche(16). Er hält die Verriegelungskörper(10) in der Tasche(16). Die Steckachse(20) des Adapters(19) kann nun ganz herausgezogen werden. Es läßt sich dann einfach ein mit einem anderen Werkzeug bestückter Adapter einstecken. Seine Schräge(24) drückt den Innenring(17) gegen die Kraft der Feder(18) nach innen und der Außenring(11) drückt unter der Kraft der Druckfeder(13) die Verriegelungskörper(10) in die Vertiefungen(23).

Die beschriebene Einrichtung ist auch bei Bohrmaschinen und Akkuschraubern vorteilhaft, weil auch bei Bohrmaschinen infolge von Betriebsbelastungen, die von der Mittelachse(A) abweichen, Passungsrost auftreten kann, der die beschriebene nachteilige Wirkung hat.

## Patentansprüche

1. Handgeführte Werkzeugmaschine, wie Bohrmaschine, Schlagbohrmaschine, Schrauber, mit einer motorisch angetriebenen Spindel und einer Werkzeugaufnahme, wobei die Spindel drehend und axial schlagend beweglich ist, und die Spindel als Spindelhülse(3) ausgebildet ist, und in der Spindelhülse(3) mindestens ein Radiallager(7,8) sitzt, das ein Wälzlager, insbesondere ein Nadellager, oder eine Gleithülse ist, und an der Spindelhülse(3) neben dem Radiallager(7,8) bzw. zwischen den Radiallagern (7,8) Verriegelungskörper(10) gelagert sind, und mit einem Adapter(19), der die Werkzeugaufnahme(26) und eine Steckachse (20) aufweist, wobei die Steckachse(20) mit in das bzw. die Radiallager(7,8) einsteckbaren Lagerfläche/n(21,22) und mit den Verriegelungskörpern(10) zugeordneten Vertiefungen(23) versehen ist, über die die Steckachse(20) mit den Verriegelungskörpern(10) der Spindelhülse(3) drehfest koppelbar ist.

2. Werkzeugmaschine nach Anspruch 1,
dadurch gekennzeichnet,
daß die Vertiefungen(23) der Steckachse(20) den Verriegelungskörpern(10) so angepaßt sind, daß die Verriegelungskörper(10) die Schlagbewegung der Spindelhülse(3) auf die Vertiefungen(23) der Steckachse(20) übertragen.

3. Werkzeugmaschine nach Anspruch 1 oder 2,
dadurch gekennzeichnet,
daß in der Spindelhülse(3) ein Axiallager(33) angeordnet ist, das die Schlagbewegung der Spindelhülse(3) auf die Steckachse(20) überträgt.

4. Werkzeugmaschine nach einem der vorhergehenden Ansprüche,
dadurch gekennzeichnet,
daß die Vertiefungen(23) an spitzen Übergängen(42) aneinander angrenzen.

5. Werkzeugmaschine nach einem der vorhergehenden Ansprüche,
dadurch gekennzeichnet,
daß das Schlagwerk(6) ein Ratschenschlagwerk ist.

## Claims

1. Hand-held machine tool, such as a drill, percussion drill, screwdriver, having a motor-driven spindle and a tool seat, wherein the spindle is movable rotarily and with axial percussion, and the spindle is formed as a spindle sleeve (3) and in the spindle sleeve (3) at least one radial bearing (7, 8) is provided, which is a roller bearing, in particular a needle bearing or a sliding sleeve, and on the spindle sleeve (3) adjacent to the radial bearing (7, 8) or between the radial bearings (7, 8) locking bodies (10) are housed, and having an adapter (19) which comprises the tool seat (26) and a plug-in shaft (20), the plug-in shaft (20) being provided with a bearing face or faces (21, 22) insertable in the radial bearing/s (7, 8) and with recesses (23) allocated to the locking bodies (10), via which recesses the plug-in shaft (20) is couplable with the locking bodies (10) of the spindle sleeve (3) in a non-rotatable manner.

2. Machine tool according to claim 1, characterised in that the recesses (23) in the plug-in shaft (20) are so adapted to the locking bodies (10) that the locking bodies (10) transmit the percussive movement of the spindle sleeve (3) to the recesses (23) in the plug-in shaft (20).

3. Machine tool according to claim 1 or 2, characterised in that in the spindle sleeve (3) an axial bearing (33) is disposed, which transmits the percussive movement of the spindle sleeve (3) to the plug-in shaft (20).

4. Machine tool according to one of the preceding claims, characterised in that the recesses (23) abut one another at pointed transitions (42).

5. Machine tool according to one of the preceding claims, characterised in that the ram (6) is a ratchet ram.

## Revendications

1. Machine-outil guidée à la main, comme perceuse, perceuse à percussion, visseuse, avec une broche entraînée par moteur et un raccordement d'outil, où la broche est déplacable de manière rotative et avec une percussion axiale, et où la broche est réalisée sous forme de douille de broche (3), et dans la douille de broche (3) se trouvant au moins un palier radial (7, 8) qui est un palier à roulement, notamment un palier à aiguilles ou une douille de glissement, et où sont logés à la douille de broche (3) à côté du palier radial (7, 8) respectivement entre les paliers radiaux (7, 8) des corps de verrouillage (10), et avec un adaptateur (19) qui présente le raccordement d'outil (26) et un axe d'enfichage (20), l'axe d'enfichage (20) étant pourvu de la ou des surfaces de palier (21,22) pouvant être enfichées dans le ou les paliers radiaux (7, 8) et de creux (23) associés aux corps de verrouillage (10), par lesquels l'axe d'enfichage (20) peut être accouplé d'une manière immobile en rotation avec les corps de verrouillage (10) de la douille de broche (3).

2. Machine-outil selon la revendication 1,
caractérisée en ce
que les creux (23) de l'axe d'enfichage (20) sont adaptés aux corps de verrouillage (10) de façon que les corps de verrouillage (10) transmettent le mouvement de percussion de la douille de broche (3) aux creux (23) de l'axe d'enfichage (20).

3. Machine-outil selon la revendication 1 ou 2,
caractérisée en ce
qu'il est disposé dans la douille de broche (3) un palier axial (33) qui transmet le mouvement de percussion de la douille de broche (3) à l'axe d'enfichage (20).

4. Machine-outil selon l'une des revendications précédentes,
caractérisée en ce
que les creux (23) sont contigus les uns aux autres à des passages de transition pointus (42).

5. Machine-outil selon l'une des revendications précédentes,
caractérisée en ce
que le mécanisme de percussion (6) est un mécanisme de percussion à rochet.
